(19) Europäisches Patentamt

European Patent Office

Office européen des brevets

(11) Veröffentlichungsnummer: **0 676 732 A1**

# (12) EUROPÄISCHE PATENTANMELDUNG

(21) Anmeldenummer: **95103366.1**

(22) Anmeldetag: **09.03.95**

(30) Priorität: **06.04.94 CH 1002/94**

(43) Veröffentlichungstag der Anmeldung:
**11.10.95 Patentblatt  95/41**

(84) Benannte Vertragsstaaten:
**CH DE FR GB LI**

(51) Int. Cl.⁶: **G08B  5/22,  H04Q 7/18**

�noneAnmelder: **FIRMA ERIKA KÖCHLER**
**Fälmisstrasse 21**
**CH-8833 Samstagern (CH)**

(72) Erfinder: **Niedermann, Thomas**
**Seeblick 11**
**CH-8832 Wollerau (CH)**

(74) Vertreter: **Blum, Rudolf Emil Ernst et al**
**c/o E. Blum & Co**
**Patentanwälte**
**Vorderberg 11**
**CH-8044 Zürich (CH)**

(54) **Verfahren zum Betrieb eines Personenfunkrufnetzes.**

(57) Zur Uebertragung von Meldungen, die aus numerischen und alphanumerischen Zeichen bestehen, wird vorgeschlagen, die numerischen Zeichen soweit möglich in einem numerischen Uebertragungsformat zu übermitteln, welches mit einer kleineren Bitzahl pro Zeichen auskommt als ein alphanumerisches Uebertragungsformat. Durch diese Aufteilung der Meldungen und Uebertragung in verschiedenen Datenformaten kann die übertragene Datenmenge bei gleichem Inhalt reduziert werden. Da sowohl ein numerisches als auch ein alphanumerisches Uebertragungsformat von den meisten Funkrufnetzen unterstützt wird, ist das Verfahren völlig transparent für den Netzbetreiber und erfordert keine netzseitigen Anpassungen.

Besonders grosse Vorteile bietet das Verfahren dann, wenn mehrere Meldungen ähnlichen Inhalts ausgesendet werden, die sich nur in ihren numerischen Teilen unterscheiden. In diesem Fall braucht der alphanumerische Teil nur einmal übertragen zu werden. Nur der numerische Teil, der in einem kompakteren Format gesendet werden kann, muss für jede Meldung einzeln ausgeschickt werden.

EP 0 676 732 A1

Die Erfindung betrifft ein Verfahren zur Uebermittlung von Meldungen in einem Personenfunkrufnetz gemäss dem Oberbegriff von Anspruch 1 sowie einen Funkrufempfänger zur Ausführung des Verfahrens.

Digitale Funkrufnetze zum Personenruf (sogenannten Pager-Netze) finden immer grössere Verbreitung. Mit ihrer zunehmenden Popularität steigt jedoch auch die zu übermittelnde Datenmenge schnell an. Da die zur Verfügung stehenden Funkkanäle und deren Bandbreite begrenzt sind, kommt es zunehmend zu Engpässen im Betrieb solcher Netze, insbesondere in Spitzenzeiten mit grossem Datenaufkommen.

Zur Milderung dieses Problems können die zu übermittelnden Daten in spezieller Weise komprimiert werden, was jedoch eine entsprechende Anpassung der Hard- und Software des Netzes bedingt und mit hohen Kosten verbunden ist.

Deshalb stellt sich die Aufgabe, ein Verfahren zur Uebermittlung der eingangs genannten Art zur Verfügung zu stellen, das diese Nachteile nicht aufweist und in einer für das Netzwerk transparenten Weise eine Reduktion der anfallenden Datenmenge erlaubt.

Diese Aufgabe wird durch das Verfahren resp. den Funkrufempfänger gemäss den unabhängigen Ansprüchen gelöst.

Die meisten der heute betriebenen Funkrufnetze sind zur Uebermittlung von numerischen und von alphanumerischen Meldungen ausgelegt. Bei den numerischen Meldungen, welche in einem ersten, reduzierten Uebertragungsformat ausgestrahlt werden, steht nur ein beschränkter Zeichensatz zur Verfügung, bei dem z.B. jedes Zeichen in 4 Bit kodiert wird. Bei alphanumerischen Meldungen, die in einem zweiten, erweiterten Uebertragungsformat ausgestrahlt werden, steht ein erweiterter Zeichensatz zur Verfügung, bei dem jedes Zeichen z.B. in 7 Bit kodiert wird. Wird nun eine Meldung (soweit möglich) mindestens teilweise im ersten Uebertragungsformat gesendet, so reduziert sich die Daten-menge gegenüber einer vollständigen Uebertra-gung der gleichen Meldung im zweiten Uebertragungsformat. Diese Aufteilung der Meldung in einen numerischen und einen alphanumerischen Teil ist für das Funkrufnetz völlig transparent, da dieses beide diese Formate kennt und unterstützt.

Das erfindungsgemässe Verfahren wird besonders vorteilhaft angewandt, wenn eine Meldung aus einem alphanumerischen Maskenteil und einem numerischen Datenteil besteht und mehrmals zu übertragen ist, wobei sich nur der Datenteil bei jeder Uebertragung ändert. In diesem Falle braucht nur der Datenteil, nicht aber Maskenteil jedes Mal übertragen zu werden. Da der Datenteil im dichteren, numerischen Format vorliegt, ist er wesentlich kürzer als die ganze Meldung.

Weitere Vorteile und Anwendungen der Erfindung ergeben sich aus der nun folgenden Beschreibung einer Ausführung der Erfindung anhand der Figuren. Dabei zeigen:

Figur 1 ein Blockdiagramm eines Personenfunkrufnetzes,
Figur 2 eine erste Möglichkeit der erfindungsgemässen Uebertragung einer Meldung,
Figur 3 eine zweite Möglichkeit der erfindungsgemässen Uebertragung einer Meldung,
Figur 4 ein Beispiel für eine Meldung mit Maskenteil und Datenteil, und
Figur 5 den schemantische Aufbau eines Funkrufempfängers.

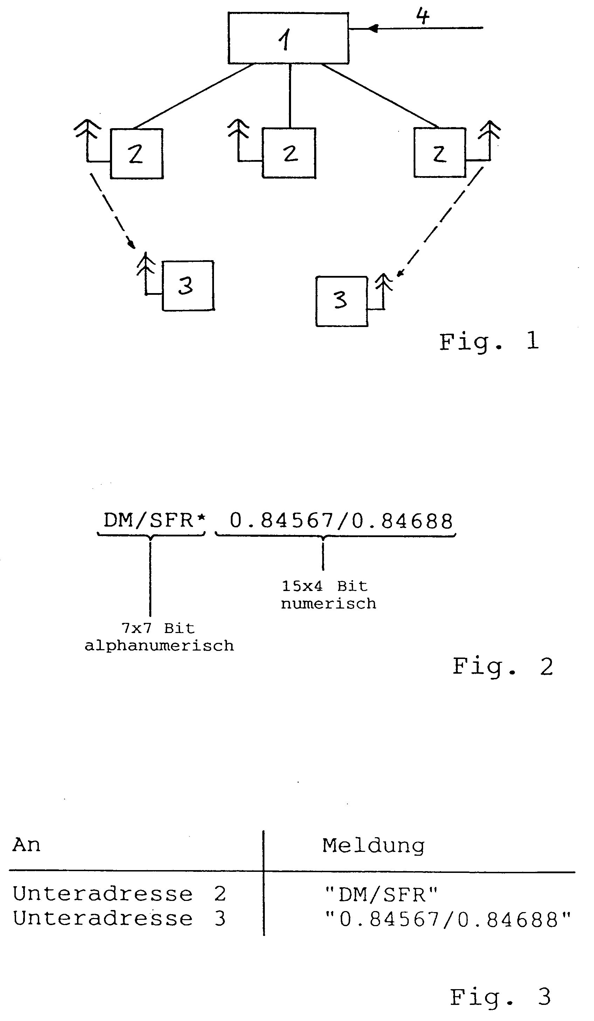

Figur 1 zeigt ein vereinfachtes Blockdiagramm eines Funkrufnetzes. Eine Zentrale 1 verwaltet mehrere Sender 2, welche in bekannter Weise Meldungen ausstrahlen, die von tragbaren Empfängern 3 aufgefangen werden. Die auszustrahlenden Meldungen werden der Zentrale 1 über geeignete Kanäle 4 zugeleitet. So kann zum Beispiel ein Informationsanbieter mit der Zentrale 1 über ein Telefon-Modem in Verbindung treten.

Ueblicherweise erlauben solche Netzwerke die Uebertragung von Nur-Ton-Rufen, numerischen Rufen und alphanumerischen Rufen als Standarddienste. Während bei einem Nur-Ton-Ruf keine Daten übermittelt werden, können bei numerischen und alphanumerischen Rufen ein oder mehrere Zeichen übertragen werden. Bei numerischen Rufen steht jedoch nur ein beschränkter Zeichensatz zur Verfügung, der in der Regel die Zahlen von 0 bis 9 sowie einige Spezialzeichen (wie zum Beispiel Punkt und Schrägstrich) umfasst. Der numerische Zeichensatz ist in der Regel auf 16 Zeichen beschränkt, was es erlaubt, jedes Zeichen in nur vier Bit zu kodieren. Beim alphanumerischen Uebertragungsformat steht andererseits ein grösserer Zeichensatz zur Verfügung, der nebst den Zahlen auch lateinische Buchstaben und Sonderzeichen umfasst. Typischerweise werden die Zeichen des alphanumerischen Zeichensatzes in 7 Bit kodiert.

In herkömmlichen Systemen kann der Benutzer wählen, ob er eine Meldung im numerischen oder alphanumerischen Uebertragungsformat aussenden will. Sobald jedoch nur ein Zeichen einer Meldung nicht im numerischen, sondern nur im alphanumerischen Zeichensatz enthalten ist, muss er die ganze Meldung als alphanumerische Meldung übertragen. So ist zum Beispiel die Meldung "DM/SFR 0.84567/0.84688" als alphanumerische Meldung zu übertragen, da die Zeichen DM und SFR nicht im numerischen Zeichensatz enthalten sind. Dies bedeutet, dass für die ganze Meldung (ohne Leerzeichen) 21 x 7 = 147 Bit benötigt werden (bei einer 7 Bit Kodierung der alphanumerischen Zeichen).

Gemäss dem erfindungsgemässen Verfahren kann eine solche Meldung nun aufgeteilt und teilweise im numerischen und teilweise im alphanumerischen Uebertragungsformat ausgesendet werden. So wird z.B. der erste Teil der Meldung ("DM/SFR") im alphanumerischen Format gesendet, der zweite Teil ("0.84567/0.84688") im numerischen Format. Damit beträgt die gesamte Länge der Meldung 6 x 7 + 15 x 4 = 102 Bits, was gegenüber der herkömmlichen Uebertragung eine Einsparung von über 30% bedeutet. Dies ermöglicht einen günstigeren Tarif bei gleichem Meldungsinhalt oder einen grösseren Meldungsdurchsatz bei gleicher Belastung der verwendeten Funkruffrequenz.

Im folgenden werden zwei Möglichkeiten diskutiert, wie die Meldung "DM/SFR 0.84567/0.84688" an einen Funkrufempfänger übertragen wird.

Bei der ersten Möglichkeit wird die Meldung wie in Figur 2 gezeigt kodiert. Die ersten 6 Zeichen "DM/SFR" werden als alphanumerische Zeichen mit je 7 Bit dargestellt. Dann folgt ein weiteres alphanumerisches Zeichen von 7 Bit Länge, z. B. das Zeichen "*". Die Funkrufempfänger sind so ausgestaltet, dass sie dieses Zeichen als Sonderzeichen erkennen, welches zwischen dem alphanumerischen und dem numerischen Format umschaltet. Das Zeichen "*" zeigt dem Empfänger also an, dass die folgenden Zeichen als numerische Zeichen in 4 Bit kodiert sind. Danach folgen die numerischen Zeichen "0.84567/0.84688", welche total 15 x 4 Bit belegen. Die Ganze Meldung umfasst somit 109 Bit. Sie wird der Zentrale 1 des Netzes als alphanumerische Meldung mit 16 Zeichen (112 Bit) zugestellt, wobei die Zentrale nicht zu wissen braucht, dass nur die ersten 7 der Zeichen wirklich echte, alphanumerische Zeichen sind.

In diesem Beispiel wurde also mit dem Zeichen "*" vom alphanumerischen 7-Bit Format auf das numerische 4-Bit Format umgeschaltet werden. Soll danach wieder in das alphanumerische Format zurückgeschalt werden, so ist auch im numerischen Zeichensatz ein geeignetes Zeichen zu reservieren, welches anzeigt, dass die folgenden Zeichen wieder alphanumerisch sind und je 7 Bit aufweisen.

Ein gewisser Nachteil dieser Methode liegt jedoch darin, dass die numerischen, 4 Bit kodierten Zeichen im Datenblock einer alphanumerischen Meldung übertragen werden müssen, was vor der Uebermittlung der Zeichen an die Zentrale 1 eine entsprechende Umrechnung nötig macht.

Eine zweite erfindungsgemässe Möglichkeit der Datenübertragung wird in Figur 3 illustriert. Hier wird angenommen, dass dem Empfänger mindestens zwei Unteradressen (z.B. Unteradressen 2 und 3) zugeordnet sind. Der Empfänger ist dabei so ausgestaltet, dass er Meldungen auf der Unteradresse 2 als alphanumerische Meldungen, solche auf der Unteradresse 3 als numerische Meldungen interpretiert. Ausserdem ist er so programmiert, dass er nach Empfang einer ersten Meldung diese in einem Zwischenspeicher ablegt und wartet, bis eine zweite Meldung auf der anderen Unteradresse ankommt. Dann setzt er die beiden Meldungen zu einer Gesamtmeldung zusammen und zeigt sie an.

Vor dem Senden wird die Meldung in zwei Teilmeldungen unterteilt, von denen die erste alphanumerisch ist und die Zeichenkette "DM/SFR" enthält. Die zweite ist numerisch und enthält die Zeichenkette "0.84567/0.84688". Der Informationsanbieter leitet die beiden Meldungen zur Aussendung an die entsprechenden Unteradressen 2 resp. 3 des Empfängers an die Zentrale 1. Für diese Zentrale verhalten sich die beiden Meldungen wie normale numerische bzw. alphanumerische Rufe.

Die beschriebenen Uebermittlungsverfahren können in verschiedenster Weise den jeweiligen Anforderungen und Bedingungen angepasst werden.

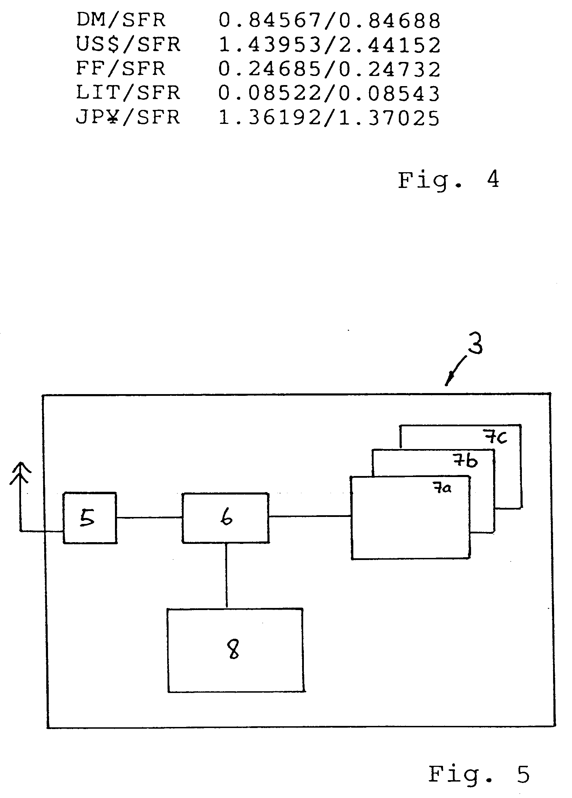

Ein besonders vorteilhaftes Verfahren kann dann zur Anwendung kommen, wenn mehrmals Meldungen zu übergtragen sind, welche zumindest teilweise miteinander übereinstimmen. Ein Beispiel für eine solche Meldung wird in Figur 4 gezeigt. Hier handelt es sich um eine Tabelle der Wechselkurse einiger Währungen. Diese Tabelle muss mehrmals täglich nachgeführt werden. In herkömmlichen Systemen wird hierzu die ganze Tabelle in regelmässigen Zeitabständen ausgesendet. Da sie rund hundert Zeichen lang ist, führt dies zu einer erheblichen Belastung des Netzes.

Im erfindungsgemässen Verfahren kann die rechte Spalte der Tabelle, welche nur Zeichen des numerischen Zeichensatzes enthält, als numerische Meldung übertragen werden. Die linke Spalte, die alphanumerische Zeichen enthält, wird als alphanumerischer Text gesendet. Durch diese Aufteilung der Meldung kann bereits eine beträchtliche Reduktion der Datenmenge erreicht werden.

Wie im folgenden beschrieben wird, kann die Datenmenge jedoch noch weiter reduziert werden.

Bei einer Tabelle, wie sie in Figur 4 gezeigt wird, bildet die linke Spalte eine Maske, die sich nicht ändert. Unabhängig von den Daten, die in der rechten Spalte stehen, bleibt diese Maske immer gleich. Sie braucht deshalb nicht mit jeder Aenderung der Daten neu übertragen zu werden.

Deshalb geht man vorzugsweise bei der Uebertragung folgendermassen vor: Der Maskenteil der Mitteilung (d.h. die linke Spalte von Figur 4) wird als alphanumerische Meldung, z.B. auf eine erste Unteradresse des Empfängers übertragen. Der Empfänger legt die Maske in einem Zwischenspeicher ab. Danach wird der Datenteil der Mitteilung (d.h. die rechte Spalte von Figur 4) als numerische Meldung, z.B. auf eine zweite Unteradresse des Empfängers übertragen. Dieser Datenteil wird im Zwischenspeicher mit der Maske kombiniert und kann von dort bei Bedarf abgerufen werden.

Aendert sich nun der Datenteil, so braucht nur dieser wieder übertragen zu werden. Auch dies geschieht wiederum als numerische Meldung auf die zweite Unteradresse. Der Empfänger ersetzt nun den Datenteil der im Zwischenspeicher liegenden Meldung mit den neuen Informationen.

Auf diese Weise wird die übertragene Datenmenge drastisch reduziert. Anstelle von etwa hundert alphanumerischen Zeichen à 7 Bit brauchen jetzt zum Auffrischen der Daten nur etwa siebzig Zeichen à 4 Bit übertragen zu werden. Der Maskenteil (etwa 30 Zeichen à 7 Bit) braucht nicht jedes Mal gesendet zu werden. Der Maskenteil kann zum Beispiel nur einmal täglich (vorzugsweise zu einer Zeit mit geringer Netzbelastung), der Datenteil aber stündlich ausgesendet werden.

Selbstverständlich kann das Verfahren auch auf mehrere Meldungen dieser Art ausgeweitet werden. So kann zum Beispiel im Empfänger ein Zwischenspeicher für Wechselkurse und ein Zwischenspeicher für Aktienkurse nachgeführt werden. Jeder Zwischenspeicher speichert einerseits einen Maskenteil, andererseits einen Datenteil. Ueber eine erste, alphanumerisch betriebene Unteradresse wird die Maske in den Zwischenspeicher eingeschrieben, wobei z.B. ein erstes Zeichen der Meldung vorangestellt wird, welches festlegt, in welchem Zwischenspeicher die Maske abgelegt werden muss. Die numerischen Daten werden über eine zweite, numerisch betriebene Unteradresse empfangen. Auch hier ist wieder ein erstes Zeichen als Steuerzeichen vorgesehen, welches den zu ändernden Zwischenspeicher auswählt.

Ein Ausführungsbeispiel für einen Funkrufempfänger 3 zum Empfang solcher Meldungen ist in Figur 5 dargestellt. Dieser Emfpänger hat zum Beispiel vier Unteradressen 0 - 3, von denen die ersten beiden als Nur-Ton resp. alphanumerische Kanäle bekannter Art arbeiten. Unteradresse 2 ist zum Empfang alphanumerischer Teilmeldungen, Unteradresse 4 zum Empfang numerischer Teilmeldungen ausgelegt.

Der Funkrufempfänger umfasst einen Empfänger/Demodulatorteil 5 bekannter Art. Eine Steuereinheit 6 analysiert die ankommenden Signale. Wird auf Unteradresse 2 eine Meldung der Art empfangen, wie sie z.B. in Figur 3 dargestellt ist, so wird sie in einem Zwischenspeicher 7a abgelegt. Der Empfänger wartet sodann auf die numerische Meldung auf Unteradresse 3 (vgl. Figur 3). Sobald diese vorliegt, kombiniert er sie mit dem ersten Teil der Meldung, die im Zwischenspeicher 7a liegt und bringt sie zur Anzeige auf dem Anzeigeelement 8.

Zur Verwaltung von Meldungen der Art, wie sie in Figur 4 gezeigt werden, sind weitere Zwischenspeicher 7b, 7c, ... vorgesehen. Die Daten in diesen Zwischenspeichern können in der oben beschriebenen Weise entweder über numerische oder alphanumerische Meldungen geändert werden. Der Anwender kann die Daten in diesen Zwischenspeichern 7b und 7c jederzeit auf der Anzeige 8 darstellen lassen.

Um zu unterscheiden, in welchen der Zwischenspeicher 7a - 7c eine Meldung abgelegt werden muss, und ob es sich um eine Meldung gemäss Figur 3 oder eine Tabelle gemäss Figur 4 handelt, kann z.B. das erste Zeichen jeder der auf Unteradresse 2 resp. 3 empfangenen Meldungen als Steuerzeichen interpretiert werden, wobei z.B. eine "0" sagt, dass es sich um einen Teil einer Meldung gemäss Figur 3 handelt, die im Zwischenspeicher 7a abzulegen und sofort auszugeben ist, sobald der zweite Teil der Meldung ankommt. Eine "1" rsp. "2" besagt, dass es sich um eine Meldung handelt, die in Zwischenspeicher 7b rsp. 7c abzulegen ist.

Die Verwendung weiterer Steuerzeichen ist z.B. denkbar, um eine Meldung an einem bestimmten Ort in einem Zwischenspeicher abzulegen, so dass sie bei Abruf auf einem bestimmten Platz in der Anzeige erscheint.

Auf jeden Fall ist es dank der vorliegenden Erfindung möglich, die Datenmenge auf dem Netz zu reduzieren. In erster Linie geschieht dies dadurch, dass numerische Teile von Meldungen in einem numerischen Zeichenformat mit geringerer Bitlänge übertragen werden.

Besonders grosse Vorteile bietet das Verfahren dann, wenn die alphanumerischen Teile von wiederholt vorkommenden Meldungen immer gleich sind und somit nicht jedes Mal übertragen werden müssen.

**Patentansprüche**

1. Verfahren zur Uebermittlung einer Meldung über ein Personenfunkrufnetz (1, 2) an einen Funkrufempfänger (3), wobei die Meldung aus Zeichen eines erweiterten, im wesentlichen alphanumerischen Zeichensatzes besteht, und wobei einige Zeichen der Meldung gleichzeitig in einem reduzierten, im wesentlichen numerischen Zeichensatz enthalten sind, dadurch gekennzeichnet, dass mindestens ein Teil der Zeichen der Meldung, die im reduzierten Zeichensatz enthalten sind, in einem ersten, reduzierten Uebertragungsformat, und die übrigen Zeichen in einem zweiten, erweiterten Uebertragungsformat übermittelt werden.

2. Verfahren nach Anspruch 1, dadurch gekennzeichnet, dass zur Umschaltung zwischen den beiden Uebertragungsformaten je ein vorbestimmtes Kontrollzeichen verwendet wird.

3. Verfahren nach Anspruch 1, wobei dem Funkrufempfänger (2) mindestens zwei Adressen zugeordnet sind, und wobei auf einer ersten Adresse Daten im ersten Uebertragungsformat, und auf einer zweiten Adresse Daten im zweiten Uebertragungsformat übertragen werden, dadurch gekennzeichnet, dass die Meldung teilweise auf die erste Adresse und teilweise auf die zweite Adresse übermittelt wird.

4. Verfahren nach einem der vorangehenden Ansprüche, dadurch gekennzeichnet, dass mehrere Meldungen zu übermitteln sind, wobei alle Meldungen in einem Maskenteil übereinstimmen, sich aber in einem Datenteil unterscheiden können, und dass nur der Datenteil für jede Meldung einzeln übermittelt wird, und der Maskenteil für mehrere Meldungen gemeinsam nur einmal übermittelt wird.

5. Verfahren nach Anspruch 6, dadurch gekennzeichnet, dass der Datenteil so gewählt wird, dass er nur Zeichen aus dem reduzierten Zeichensatz enthält und im ersten Uebertragungsformat übermittelt wird.

6. Funkrufempfänger zur Ausführung des Verfahrens nach einem der vorangehenden Ansprüche, der einen Dekodier- und Steuerteil (5, 6) zur Dekodierung von Zeichen eines in einem ersten Uebertragungsformat übertragenen, reduzierten Zeichensatzes und eines in einem zweiten Uebertragungsformat übertragenen, erweiterten Zeichensatzes aufweist, dadurch gekennzeichnet, dass ein Kombinationsteil (7a - 7c) vorgesehen ist, in welchem Meldungen im ersten und Meldungen im zweiten Uebertragungsformat zusammensetzbar sind.

7. Funkrufempfänger nach Anspruch 6, dadurch gekennzeichnet, dass der Kombinationsteil (7a - 7c) einen Speicher zur Zwischenspeicherung empfangener Teilmeldungen aufweist.

Fig. 1

$$\underbrace{DM/SFR\star}_{\substack{7x7\ Bit\\ alphanumerisch}}\ \underbrace{0.84567/0.84688}_{\substack{15x4\ Bit\\ numerisch}}$$

Fig. 2

| An | Meldung |
|---|---|
| Unteradresse 2 | "DM/SFR" |
| Unteradresse 3 | "0.84567/0.84688" |

Fig. 3

```
DM/SFR      0.84567/0.84688
US$/SFR     1.43953/2.44152
FF/SFR      0.24685/0.24732
LIT/SFR     0.08522/0.08543
JP¥/SFR     1.36192/1.37025
```

Fig. 4

Fig. 5

Europäisches
Patentamt

**EUROPÄISCHER RECHERCHENBERICHT**

Nummer der Anmeldung

| | EINSCHLÄGIGE DOKUMENTE | | EP 95103366.1 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 6) | |
| X | US - A - 5 283 570 (DE LUCA) * Fig. 2; Spalte 2, Zeile 60 - Spalte 3, Zeile 18; Spalte 3, Zeile 57 - Spalte 4; Zeile 2 * | 1,2 | G 08 B 5/22 H 04 Q 7/18 | |
| A | WO - A - 92/03 883 (MOTOROLA) * Fig. 1; Seite 2, Zeile 10 - Seite 3, Zeile 5 * | 1,3 | | |
| A | CH - A - 681 398 (ERIKA KÖCHLER) * Fig. 3,5; Zusammenfassung; Spalte 3, Zeile 63 - Spalte 6, Zeile 17 * | 1,3,6 | | |
| | | | RECHERCHIERTE SACHGEBIETE (Int. Cl 6) | |
| | | | G 08 B H 04 Q H 04 M | |

Der vorliegende Recherchenbericht wurde für alle Patentansprüche erstellt.

| Recherchenort | Abschlußdatum der Recherche | Prüfer |
|---|---|---|
| WIEN | 07-07-1995 | DRÖSCHER |